# EUROPÄISCHE PATENTSCHRIFT

(11) **EP 2 289 044 B1**
(45) Veröffentlichungstag und Bekanntmachung des Hinweises auf die Patenterteilung: **21.03.2012**
(21) Anmeldenummer: 08874687.0
(22) Anmeldetag: 18.11.2008
(51) Int. Cl.: G06T 5/00, G06T 11/00

(54) **BILDDATENVISUALISIERUNG**
IMAGE DATA VISUALIZATION
VISUALISATION DE DONNÉES D'IMAGE

(30) Priorität: 20.06.2008 DE 102008002560
(43) Veröffentlichungstag der Anmeldung: 02.03.2011
(73) Patentinhaber: Robert Bosch GmbH, 70442 Stuttgart (DE)
(72) Erfinder: NIEHSEN, Wolfgang, 31162 Bad Salzdetfurth (DE); SIMON, Stephan, 31079 Sibbesse (DE)
(86) Internationale Anmeldenummer: PCT/EP2008/065748
(87) Internationale Veröffentlichungsnummer: WO 2009/152875

(56) Entgegenhaltungen:
- DE-A1-102007 032 814
- WIDED MILED ET AL: "Robust Obstacle Detection Based on Dense Disparity Maps" COMPUTER AIDED SYSTEMS THEORY Â EUROCAST 2007; [LECTURE NOTES IN COMPUTER SCIENCE], SPRINGER BERLIN HEIDELBERG, BERLIN, HEIDELBERG, Bd. 4739, 12. Februar 2007 (2007-02-12), Seiten 1142-1150, XP019081968 ISBN: 978-3-540-75866-2
- ZHENCHENG HU ET AL: "A Complete U-V-Disparity Study for Stereovision Based 3D Driving Environment Analysis" 3-D DIGITAL IMAGING AND MODELING, 2005. 3DIM 2005. FIFTH INTERNATIONAL CONFERENCE ON OTTAWA, ON, CANADA 13-16 JUNE 2005, PISCATAWAY, NJ, USA,IEEE, 13. Juni 2005 (2005-06-13), Seiten 204-211, XP010810998 ISBN: 978-0-7695-2327-9
- FISCHER J ET AL: "Stylized augmented reality for improved immersion" VIRTUAL REALITY, 2005. PROCEEDINGS. VR 2005. IEEE BONN, GERMANY MARCH 12-16, 2005, PISCATAWAY, NJ, USA,IEEE, 1. Januar 2005 (2005-01-01), Seiten 195-202, XP031173587 ISBN: 978-0-7803-8929-8
- FRANKE U ET AL: "Fast stereo based object detection for stop&go traffic" INTELLIGENT VEHICLES SYMPOSIUM, 1996., PROCEEDINGS OF THE 1996 IEEE TOKYO, JAPAN 19-20 SEPT. 1996, NEW YORK, NY, USA,IEEE, US, 19. September 1996 (1996-09-19), Seiten 339-344, XP010209760 ISBN: 978-0-7803-3652-0
- SUN ZEHANG ET AL: "On-road vehicle detection: a review" IEEE TRANSACTIONS ON PATTERN ANALYSIS AND MACHINE INTELLIGENCE, IEEE SERVICE CENTER, LOS ALAMITOS, CA, US, Bd. 28, Nr. 5, 1. Mai 2006 (2006-05-01), Seiten 694-711, XP008092043 ISSN: 0162-8828 [gefunden am 2006-03-13]

## Beschreibung

Die Erfindung betrifft ein Verfahren zur Visualisierung von Bilddaten, insbesondere von Bilddaten, zu denen mindestens eine Zusatzinformation vorliegt gemäß dem Oberbegriff des Anspruchs 1. Weiter betrifft die Erfindung ein Computerprogramm umfassend Programmcodemittel zum Durchführen aller Schritte des erfindungsgemäßen Verfahrens gemäß Anspruch 4 und ein Computerprogrammprodukt umfassend Programmcodemittel, die auf einem computerlesbaren Medium gespeichert sind, um das erfindungsgemäße Verfahren durchzuführen, nach Anspruch 5. Auch betrifft die Erfindung eine Vorrichtung zur Visualisierung von Bilddaten, insbesondere von Bilddaten, zu denen mindestens eine Zusatzinformation vorliegt gemäß Anspruch 6.

### Stand der Technik

Die Erfindung geht aus von einem Verfahren, einer Vorrichtung, einem Computerprogramm und einem Computerprogrammprodukt zur Visualisierung von Bilddaten nach Gattung der unabhängigen Ansprüche.

Gegenstand der vorliegenden Erfindung sind auch Fahrerassistenzsysteme, Überwachungskamera-Systeme, Kamerasysteme für ein Flugzeug oder Fluggerät, Kamerasysteme für ein Wasserfahrzeug oder Unterwasserfahrzeug und dergleichen, bei denen Bilddaten dargestellt werden.

Aus der DE 102 53 509 A1 sind ein Verfahren und eine Vorrichtung zur Warnung des Fahrers eines Kraftfahrzeuges bekannt. Hierbei wird über ein Signalisierungsmittel eine optische Warnung in Richtung wenigstens eines Objektes der Fahrzeugumgebung im Blickfeld des Fahrers erzeugt, wobei die optische Warnung zumindest vor der Sichtbarkeit des Objektes für den Fahrer erfolgt. Die optische Warnung ist wenigstens ein Lichtfleck und/oder wenigstens ein Warnsymbol, wobei wenigstens die Anzeigedauer veränderbar ist. Bei dieser Lösung werden Objekte erkannt und ein Signal in Form von Symbolen für das Objekt erzeugt. Das Signal wird an den Fahrer übermittel, zum Beispiel akustisch oder optisch.

WIDED MILED ET AL: "Robust Obstacle Detection Based 'on Dense Disparity Maps" COMPUTER AIDED SYSTEMS THEORY Ä EUROCAST 2007; [LECTURE NOTES IN COMPUTER SCIENCE], SPRINGER BERLIN HEIDELBERG, BERLIN, HEIDELBERG, Bd. 4739, 12. Februar 2007 (2007-02-12), Seiten 1142-1150, XP019081968 ISBN: 978-3-540-75866-2 beschreibt eine farbliche Markierung von aus einer Grundfläche hervorstehenden Hindernissen.

ZHENCHENG HU ET AL: "A Complete U-V-Disparity Study for Stereovision Based 3D Driving Environment Analysis" 3-D DIGITAL IMAGING AND MODELING, 2005. 3DIM 2005. FIFTH INTERNATIONAL CONFERENCE ON OTTAWA, ON, CANADA 13-16 JUNE 2005, PISCATAWAY, NJ, USA,IEEE, 13.Juni 2005 (2005-06-13), Seiten 204-211, XP010810998 ISBN: 978-0-7695-2327-9 beschreibt eine Erkennung von Objekten.

DE 10 2007 032814 A1 befasst sich mit einem System zum Bereitstellen von Informationen zur Fahrunterstützung für einen Fahrer eines Fahrzeugs.

D4: FISCHER J ET AL: "Stylized augmented reality for improved immersion" VIRTUAL REALITY, 2005. PROCEEDINGS. VR 2005. IEEE BONN, GERMANY MARCH 12-16, 2005, PISCATAVVAY, NJ, USA,IEEE, 1. Januar 2005 (2005-01-01), Seiten 195-202, XP031173587 ISBN: 978-0-7803-8929-8 befasst sich mit einer stilisierten Darstellung von Objekten.

### Offenbarung der Erfindung

Das erfindungsgemäße Verfahren, die erfindungsgemäße Vorrichtung, sowie das erfindungsgemäße Computerprogramm und das erfindungsgemäße Computerprogrammprodukt zur Vsualisierung von Bilddaten mit den Merkmalen des entsprechenden Hauptanspruchs oder nebengeordneten Anspruchs haben demgegenüber den Vorteil, dass die Bilddaten bzw. ein daraus erzeugtes Bilddatenbild einem Benutzer mit korrespondierenden Zusatzinformationen, wie beispielsweise Entfernungsinformationen, angereichert, insbesondere überlagert übermittelt werden.

Durch diese zusätzlichen Informationen wie Entfernungsinformationen oder sonstigen Informationen, zum Beispiel zur Erfüllung einer Fahraufgabe (Bremsen, Beschleunigen, Folgen etc.) kann der Benutzer die Relevanz der Bilddaten, Objekte und dergleichen direkt erkennen. Der Benutzer kann somit durch die überlagerte Darstellung von Zusatzinformationen (Entfernungsinformationen etc.) und Bilddaten die zusätzliche Information schneller erfassen. Relevante Daten, Störungen etc., zum Beispiel beim Erfüllen einer Aufgabe, beispielsweise einer Fahraufgabe, lassen sich geeignet hervorheben, sodass der Benutzer diese intuitiv wahrnehmen kann und entsprechend reagieren kann, auch bei einer erhöhten Informationsdichte. Die Visualisierung kann ohne Erkennung von Objekten durchgeführt werden, da zu im Wesentlichen jedem Bildpunkt oder allen Bilddaten jeweils eine Zusatzinformation dargestellt wird. Somit lässt sich eine schnellere Visualisierung realisieren. Nicht zuletzt ist eine ästhetisch ansprechende Darstellung von relevanten Informationen möglich.

Durch die in den abhängigen Ansprüchen aufgeführten Maßnahmen sind vorteilhafte Weiterbildungen und Verbesserungen der in den unabhängigen und nebengeordneten Ansprüchen angegebenen Vorrichtungen möglich.

Besonders vorteilhaft ist es, dass die Zusatzinformationen klassifiziert dargestellt werden, insbesondere durch eine unterschiedliche Färbung, Textur, Aufhellung, Abdunklung, Schärfung, Vergrößerung, Kontrastanhebung, Kontrastabsenkung, Auslassung, virtuelle Beleuchtung, invertiert, verzerrt, abstrahiert, mit Konturen, zeitlich veränderlich (bewegen, blinken, vibrieren, wackeln) und dergleichen, sowohl einzeln als auch in Kombination, je Klassifizierung. Durch die Klassifizierung lassen sich die relevanten Informationen für einen Benutzer übersichtlicher über das Bilddatenbild überlagert darstellen. Zudem ermöglicht die Klassifizierung eine schnellere und einfachere Verarbeitung der Kombination Bilddaten und Zusatzinformationen. Störungen, Details oder weitere Informationen lassen sich den entsprechenden Klassen entnehmen, sodass eine Suche, insbesondere eine visuelle Suche, in allen Bilddaten überflüssig ist, wodurch die Verarbeitungsgeschwindigkeit erhöht und/oder die visuelle Erfassung beschleunigt wird.

Noch ein Vorteil der vorliegenden Erfindung ist es, dass die Zusatzinformationen zusätzlich in einer verarbeiteten Darstellung zumindest teilweise über und/oder neben den Bilddaten dargestellt werden, insbesondere als Histogramm oder dergleichen. Somit lässt sich die Vielzahl an Informationen (Bild-, Entfernungs- und auch weitere Informationen) komprimiert und leicht verständlich für den Benutzer und insbesondere auch zur weiteren Verarbeitung darstellen.

Die Zusatzinformationen und/oder die Bilddaten werden geglättet dargestellt. Hierbei werden die klassifizierten Informationen an den Grenzen zu benachbarten Klassen unscharf dargestellt. Insbesondere bei Bildstellen, an denen ein wesentlicher Sprung von einer Klasse in eine andere vorkommt, ist dies vorteilhaft. Auf diese Weise kann eine fließende Hervorhebung oder Darstellung realisiert werden. Es wird bei der Darstellung somit ein weicher Übergang, zum Beispiel ein optisch weicher Übergang, realisiert. Die Zusatzinformationen lassen sich zeitlich vor einer Anreicherung oder einer Überlagerung mit dem Bild glätten. Hierdurch lassen sich auch vorteilhaft Fehler ausmitteln. Die Glättung kann sowohl zeitlich, örtlich oder zeitlich und örtlich erfolgen. Die Glättung ermöglicht die Reduktion des Informationsgehaltes auf ein geeignetes Maß. Um einen mit der Glättung verbundenen Unschärfeeindruck zu minimieren oder verhindern, werden zusätzliche Linien und/oder Konturen, beispielsweise Objektkanten, Objektkonturen etc. dargestellt, beispielsweise unter Verwendung eines Canny-Algorithmus, der zum Beispiel dominante Kanten des Kamerabildes findet und bereitstellt.

Ein Vorteil ist es, dass zu einer scharfen Lokalisierung unscharfer Zusatzinformationen Übergänge, zum Beispiel Kanten von Objekten, dargestellt werden. Hiermit lassen sich trotz einer Unschärfe, beispielsweise der Färbungen, klare, scharfe Visualisierungen erzeugen.

Die erfindungsgemäße Vorrichtung und das erfindungsgemäße System zur Visualisierung von Bilddaten mit den Merkmalen der entsprechenden Ansprüche haben gegenüber dem Stand der Technik den Vorteil, dass durch die Verwendung bzw. die Umsetzung des erfindungsgemäßen Verfahrens eine schnelle und leicht verständliche Informationsaufbereitung bei einer ästhetisch ansprechenden Ausführung für den Benutzer realisierbar ist.

Weiterhin vorteilhaft ist es, dass die Mittel eine Anzeigeeinrichtung umfassen, die ausgebildet ist, weitere Informationen wie Zusatzinformationen und dergleichen angereichert und/oder überlagert zu Bilddaten darzustellen. Die Zusatzinformationen umfassen sämtliche Informationen, zum Beispiel auch solche, die mit der Entfernung oder einem Abstand zu tun haben. Hierunter sind auch daraus abgeleitete Informationen zu fassen. Beispielhaft können dies Abstandsänderungen, zum Beispiel über die Zeit, sein, Abstand dividiert durch Abstandsänderungen (auch TTC - Time to Collision) und dergleichen. Die Informationen können allgemein auch zum Beispiel andere Daten umfassen, die in geeigneter Form mit Bilddaten überlagert dargestellt werden.

Insbesondere ist es vorteilhaft, dass die Vorrichtung bzw. das System mindestens eine Schnittstelle zur Kopplung an anzuschließende Systemkomponenten wie die eines Fahrerassistenzsystems, eines Kraftfahrzeugs, weiterer Sensoren und dergleichen aufweist. Hierdurch ergeben sich zahlreiche Einsatzmöglichkeiten zur optimierten Lösung von entsprechend unterstützten Aufgaben.

Vorteilhaft lässt sich das Verfahren als Computerprogramm und/oder Computerprogrammprodukt realisieren. Hierunter sind alle Recheneinheiten zu fassen, insbesondere auch integrierte Schaltkreise wie FPGA's (Field Programmable Gate Arrays), ASIC's (Application Specific Integrated Circuit), ASSP's (Application Specific Standard Products), DSP's (Digital Signal Processor) und dergleichen sowie fest verdrahtete Rechenbausteine.

Vorzugsweise wird für das Verfahren, die Vorrichtung, das Computerprogramm, das Computerprogrammprodukt und das System ein geeignetes Verfahren zur schnelleren Bildverarbeitung eingesetzt. Ein geeignetes Verfahren, kann ein Verfahren zur Visualisierung von Bilddaten mittels Disparitäten sein. Genauer kann ein Verfahren zur Verarbeitung von Bilddaten eines Disparitätsbildes, insbesondere eines von Stereo-Videobasiert gewonnenen Rohbilddaten, die in mindestens zwei Rohbilddatenbildern vorliegen, erzeugten Disparitätsbildes, verwendet werden, wobei zu mindestens einem Datenpunkt der Bilddaten mindestens eine korrespondierende Entfernungsinformation, insbesondere eine Disparitätsinformation vorhanden ist. Zur Durchführung einer bilddatenabhängigen Aufgabe umfasst das Verfahren die Schritte: Übermitteln der Bilddaten an eine Verarbeitungseinheit und Verarbeiten der Bilddaten, wobei im Wesentlichen alle Bilddaten vor dem Verarbeiten in Bezug auf ihre Entfernungsinformationen klassifiziert werden, um einen Aufwand für die weitere Verarbeitung aufgrund der Klassifizierung der Bildpunkte zu reduzieren. Dies hat den Vorteil, dass (Bild-)Daten bzw. ein daraus erzeugtes Bilddatenbild direkt, das heißt ohne Objektgruppierung oder -transformation, verarbeitet werden können/kann. Die Verarbeitung erfolgt in Bezug auf zu einzelnen Bilddaten oder Rohbilddaten vorliegenden Entfernungsinformationen, die bezüglich der Bilddaten vorliegen. Im Wesentlichen liegt zu jedem Bildpunkt eine Entfernungsinformation, bevorzugt eine Disparität, vor. Unter Disparität versteht man im Allgemeinen den sich bei Verwendung eines Stereo-Video-Kamerasystems ergebenden Versatz der zu einem Weltpunkt auf den unterschiedlichen Kamerabildern resultierenden Bildpunkte, wobei jeder Bildpunkt und/oder jede Disparität in einer eindeutigen Beziehung zu der jeweiligen Entfernung des Weltpunktes zur Kamera steht. Beispielsweise kann die Disparität bezogen werden auf die Brennweite der Kameras und sich als Quotient aus dem Versatz der zu einem Weltpunkt korrespondierenden Bildpunkte, ausgedrückt in Bildkoordinaten, und der Brennweite der Kamera ergeben. Die Disparität ist dabei reziprok zu der Entfernung des Weltpunktes von einer Bezugsstelle wie einem Bezugspunkt, einer Bezugsfläche (z.B. im Falle rektifizierter Kameras), einer Bezugsoberfläche und dergleichen, und kann unter Berücksichtigung der Basisweite der Kameras untereinander, das heißt dem Abstand der Kameras etwa als folgendes Verhältnis angegeben werden: Der Quotient aus Disparität und Kamerabrennweite entspricht dem Quotienten aus Basisweite und Entfernung des Weltpunktes. Der Weltpunkt entspricht dem realen Punkt eines Objektes einer Umgebung. Die Bildpunkte repräsentieren den mittels Sensoren erfassten Weltpunkt in einem Kamerabild oder Bilddatenbild, zum Beispiel einem Pixelbild, welcher durch x- und y- Koordinaten in dem Pixelbild festgelegt ist. Alle Bilddaten werden entsprechend ihrer Disparität und ihrer Position, angegeben in x-Koordinaten und y-Koordinaten, bevorzugt in einem kartesischen Koordinatensystem, jeweils einer Klasse zugeordnet, d.h. klassifiziert, insbesondere gleich gekennzeichnet, und so einem Benutzer angezeigt und/oder einer Weiterverarbeitungseinrichtung übermittelt. Somit lässt sich eine schnellere Klassifizierung und damit eine schnellere Verarbeitung von (Roh-)Daten realisieren. Zudem gewinnt die zweidimensionale Darstellung auf einem Display an Informationsgehalt, indem die nicht darstellbare Tiefenrichtung durch die Überlagerung zusätzlich dargestellt wird. Das Verfahren lässt sich auf Bilddaten eines Disparitätsbildes anwenden. Rohbilddaten, etwa zur Erzeugung eines Kamerabildes lassen sich nach entsprechender Verarbeitung zu einem Disparitätenbild verwenden, können nach der Verarbeitung verworfen werden oder in Kombination mit dem Disparitätenbild verwendet werden. Bei dem Verfahren wird das Klassifizieren derart durchgeführt, dass die (Roh-)Bilddaten in mehrere Klassen, bevorzugt in mindestens zwei Klassen, weiter bevorzugt in mindestens drei Klassen, unterteilt/eingeteilt werden. Anhand der Klasseneinteilung in zwei oder mehr, zum Beispiel drei, Klassen lassen sich zum Beispiel bei einem Fahrerassistenzsystem, bei dem Bildpunkten aus einer Fahrzeugumgebung Disparitäts- bzw. Entfernungsinformationen zugeordnet werden, einfach die folgenden Aussagen treffen: Der entsprechende Bildpunkt entspricht einem realen Punkt oder einem Weltpunkt, der im Wesentlichen zu einer Ebene, Oberfläche oder beispielsweise einer Fahrbahn bzw. jeweils einem Toleranzbereich hierzu gehört, in welcher sich ein Nutzer, wie ein Fahrzeug, befindet und/oder bewegt. Das heißt, dieser Weltpunkt liegt in einer Bezugsklasse oder in einer Bezugsebene. Dabei entspricht die reale Fahrbahnoberfläche nur näherungsweise einer Ebene. Tatsächlich ist diese mehr oder weniger gekrümmt. Deshalb wird unter Bezugsebene auch eine Bezugsfläche oder Bezugsoberfäche verstanden, die im Wesentlichen, d.h. angenähert, eben ausgebildet ist. Sofern sich das Fahrzeug auf dieser Bezugsebene oder Bezugsfläche bewegt oder sich in, an oder auf dieser Bezugsebene befindet, besteht keine Kollisionsgefahr zwischen dem Fahrzeug und der als zur Bezugsebene gehörig klassifizierten Punkte. Weiter kann der Bildpunkt einem Weltpunkt entsprechen, der außerhalb, insbesondere oberhalb oder unterhalb der Bezugsebene oder Bezugsklasse liegt. Der Punkt kann dabei eine solche Höhe oder Entfernung von der Bezugsebene aufweisen, dass die Möglichkeit einer Kollision mit dem Punkt besteht. Der entsprechende Weltpunkt ist demnach ein Teil eines Hindernisses. Nach entsprechender Verarbeitung der Daten kann eine Warnung ausgegeben oder es können andere entsprechende Maßnahmen eingeleitet werden. Auch kann der Bildpunkt einem Weltpunkt entsprechen, der soweit beabstandet von der Bezugsebene liegt, dass keine Möglichkeit einer Kollision oder einer Störung besteht. Die Situationen können sich entsprechend eines Zeit- und/oder Bewegungsablaufes ändern, sodass wiederholte Klassifizierungen der Bilddaten durchgeführt werden. Dieses erfindungsgemäße Verfahren erfordert keine Trainingsphasen. Die Klassifikation erfolgt ohne jegliche Kenntnis über das Aussehen von Objekten. Es müssen keine Vorabinformationen über Eigenschaften wie Größe, Farbe, Textur, Form etc. vorliegen, sodass auch auf neue Umgebungssituationen schnell reagiert werden kann.

Das Klassifizieren der (Roh-)Bilddaten gemäß einem geeigneten Verfahren kann in Zwischenklassen durchgeführt werden, wenn die (Roh-)bilddaten in unterschiedliche Klassen klassifizierbar sind, zum Beispiel wenn ein Disparitätswert nahe an einer entsprechenden Entscheidungsschwelle für eine Klassifizierung liegt, das heißt, wenn keine sichere Klassifizierung möglich ist, nicht genügend Informationen vorliegen, Störungen auftreten oder die Grenzen nicht scharf festgelegt sind. Auch wenn ein Weltpunkt nur auf einem Bilddatenbild dargestellt ist, lässt sich dieser Bilddatenwert einer Zwischenklasse zuordnen. So kann statt einer scharfen Trennung der vorbestimmten Klassen auch eine weiche Trennung durchgeführt werden. Dabei kann die Trennung weich, das heißt kontinuierlich, durchgeführt werden oder aber auch gestuft in einer oder mehrerer Klassen. Weiter können die (Roh-)Bilddaten in zur Lösung einer Fahraufgabe relevante Klassen klassifiziert werden, insbesondere ausgewählt aus der Gruppe an Klassen umfassend: Kollisionsgefahr, keine Kollisionsgefahr, flach, steil, Hindernis, in einem Bereich eines Bezugs, unterhalb eines Bezugs, oberhalb eines Bezugs, seitlich eines Bezugsrelevant, irrelevant, unbekannt, nicht zuzuordnen und dergleichen. Auf diese Weise lässt sich eine äußerst schnelle Verarbeitung der (Roh-)Bilddaten gewährleisten, die beispielsweise dem Fahrer auf eine leicht verständliche Weise zugänglich gemacht werden können, zum Beispiel angezeigt werden können. Durch die Klassifizierung erfolgt eine Informationsreduktion, sodass für die weitere und schnellere Verarbeitung nur die relevanten Daten verarbeitet werden müssen und entsprechend schnell reagiert werden kann. Weiterhin können die (Roh-)Bilddatenbilder vor der Disparitätsbestimmung und/oder dem Klassifizieren zumindest teilweise rektifiziert werden. Insbesondere ist es vorteilhaft, wenn eine epipolare Rektifizierung durchgeführt wird. Das Rektifizieren erfolgt vorzugsweise derart, dass sich der zu einem Bildpunkt in einer Zeile y eines ersten Bilddatenbildes, zum Beispiel einer ersten Kamera, korrespondierende Bildpunkte eines zweiten Bilddatenbildes, zum Beispiel einer zweiten Kamera, in der gleichen Zeile y im Bilddatenbild des zweiten Bildes befindet, wobei hier ohne Beschränkung der Allgemeinheit angenommen wird, dass die Kameras nebeneinander angeordnet sind. Aus einer Berechnung der Verschiebung der sogenannten Disparitäten der beiden Punkte entlang der x-Achse, kann dann auf die Entfernung des Weltpunktes von den Kameras geschlossen werden und eine entsprechende Entfernungsinformation zu jedem Bildpunkt generiert werden. Besonders vorteilhaft ist es, wenn eine Vollrektifizierung durchgeführt wird, sodass der Zusammenhang zwischen der Disparität und der Entfernung für alle Bildpunkte gleich ist. Weiter kann die Klassifizierung in Bezug auf die Entfernungsinformationen das Klassifizieren hinsichtlich einer Distanz von einem Bezug in unterschiedliche Raumrichtungen umfassen. Somit lässt sich ein Disparitätsraum berechnen, anhand dem eine geeignete Klassifizierung der Bilddaten der realen Umwelt einfach vorgenommen werden kann. Der Disparitätsraum kann durch die unterschiedlichen, beliebig wählbaren Raumrichtungen aufgespannt werden. Vorzugsweise werden die Raumrichtung entsprechend einem geeignetn Koordinatensystem gewählt, beispielsweise einem, dass durch eine x-Achse, eine y-Achse und eine d-Achse (Disparitätenachse) aufgespannt wird, wobei auch andere geeignete Koordinatensysteme gewählt werden können. Zudem kann aus den Bilddaten mindestens ein Bezug aus der Gruppe der Bezüge umfassend: einen Bezugspunkt, eine Bezugsebene, eine Bezugsfläche, eine Bezugsoberfläche, einen Bezugsraum, einen Bezugshalbraum und dergleichen, insbesondere eine Bezugsfläche oder eine Bezugsebene ermittelt werden. Bevorzugt wird benachbart zu der Bezugsebene eine Toleranzbereich bestimmt. Bildpunkte, die in diesem Toleranzbereich liegen, werden als zu der Bezugsebene gehörig bestimmt. Insbesondere wird die Bezugsebene oder Bezugsfläche als eine hinsichtlich ihrer Orientierung, ihrer Lage, ihrer Krümmung sowie Kombinationen und dergleichen daraus beliebige Bezugsebene ermittelt. Beispielsweise kann eine Bezugsebene senkrecht oder waagerecht bzw. vertikal oder horizontal in der Welt stehen. Auf diese Weise lassen sich beispielsweise Objekte in einem Fahrschlauch oder einem Fahrpfad von Objekten von dazu versetzen Objekten, beispielsweise links und rechts daneben, abtrennen. Die Bezugsebenen können beliebig kombiniert werden, beispielsweise eine waagerechte Bezugsebene und eine senkrechte Bezugsebene. Ebenfalls können schräge Bezugsebenen bestimmt werden, zum Beispiel um eine Treppe oder eine Schräge von entsprechenden Objekten auf der Treppe oder der Schrägen zu trennen. Es ist zudem möglich, beliebig gekrümmte Oberflächen als Bezugsebene zu verwenden. So können beispielsweise relevante und oder interessante Objekte wie Personen auf einem Hügel oder einer Böschung von nicht relevanten oder nicht interessanten, zum Beispiel dazu entfernt versetzten, Objekten oder Personen auf einfache Weise unterschieden werden. Das Verfahren lässt sichals Computerprogramm und/oder Computerprogrammprodukt realisieren. Hierunter sind alle Recheneinheiten zu fassen, insbesondere auch integrierte Schaltkreise wie FPGA's (Field Programmable Gate Arrays), ASIC's (Application Specific Integrated Circuit), ASSP's (Application Specific Standard Products), DSP's (Digital Signal Processor) und dergleichen sowie fest verdrahtete Rechenbausteine.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: schematisch ein Beispiel für eine überlagerte Darstellung von Bilddatenbild und Zusatzinformationen für die als relevant klassifizierten Objekte.
- Figur 2: schematisch ein Kamerabild.
- Figur 3: schematisch das Disparitätsbild nach Fig. 2 mit Zusatzinformationen (Disparitäten).
- Figur 4: schematisch eine bildpunktweise Klassifikation der Bilddaten eines Kamerabildes.
- Figur 5: schematisch drei Bilder aus unterschiedlichen Stufen für eine Visualisierung einer Verkehrssituation.
- Figur 6: schematisch drei Bilder aus unterschiedlichen Stufen für eine Visualisierung einer weiteren Verkehrssituation.
- Figur 7: schematisch drei Bilder aus unterschiedlichen Stufen für eine Visualisierung einer weiteren Verkehrssituation.
- Figur 8: schematisch ein Bild einer Visualisierung bei einer ersten Einparksituation.
- Figur 9: schematisch ein Bild einer Visualisierung bei einer zweiten Einparksituation.
- Figur 10: schematisch ein Bild einer Visualisierung bei einer dritten Einparksituation.
- Figur 11: schematisch ein Bild einer Visualisierung bei einer vierten Einparksituation.
- Figur 12: schematisch drei die Visualisierung ergänzende Skalen.
- Figur 13: schematisch eine Visualisierung einer Verkehrssituation mit einem ergänzenden Histogramm.
- Figur 14: schematisch eine Visualisierung einer Verkehrssituation mit einer Aufhellung von Bildpunkten statt einer Färbung.
- Figur 15: schematisch drei unterschiedliche Anordnungen für eine Kamera.
- Figur 16: schematisch unterschiedliche Anordnungen für ein Stereo-Video-System an einem Personenkraftfahrzeug.

### Ausführungsformen der Erfindung

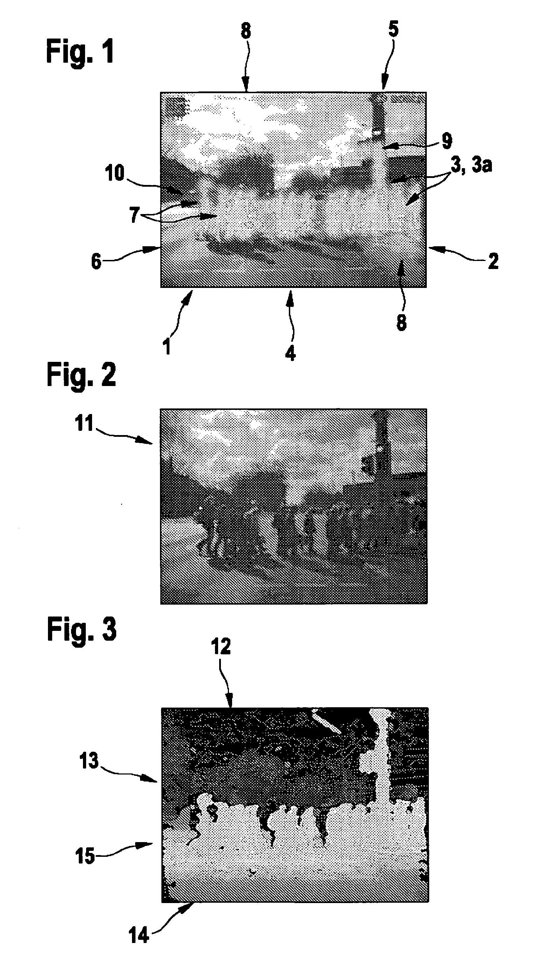

Figur 1 zeigt schematisch ein Beispiel für eine überlagerte Darstellung von Bilddatenbild 1 und Zusatzinformationen 2 für die als relevant klassifizierten Objekte 3. In den vorliegenden Ausführungsbeispielen umfassen die Zusatzinformationen überwiegend Entfernungsinformationen und/oder Informationen zur Erfüllung einer Fahraufgabe, wobei auch andere Zusatzinformationen umfasst sind. Das dargestellte Ausführungsbeispiel betrifft ein Fahrerassistenzsystem. Mittels eines Kamerasystems, insbesondere einem Stereo-Video-Kamerasystem, das heißt einem Kamerasystem mit mindestens zwei versetzt zueinander angeordneten Kameras, wird eine Umgebung, hier im vorderen Sichtbereich eines in einem das Kamerasystem tragenden Kraftfahrzeug befindlichen Fahrers, erfasst. Die Umgebung stellt eine Verkehrssituation dar, in welcher ein weitere, auf einer Straße 4 befindliches Kraftfahrzeug an einer Ampel 5 vor einem Fußgängerüberweg 6 hält, über welchen mehrere Fußgänger 7 die Straße 4 queren. Das erfasste Bild dieser Verkehrssituation wird für den Fahrer auf einer Anzeigeneinrichtung, hier einem Display wiedergegeben. Zusätzlich sind auf dem Bild angereichert oder überlagert zu den Bilddaten 1 Zusatzinformationen 2 in Form von Entfernungsinformationen überlagert dargestellt. Die Zusatzinformationen 2 sind vorliegend anhand von unterschiedlichen Färbungen dargestellt. In dem vorliegenden Beispiel sind nicht jedem Bildpunkt farblich hervorgehobene Zusatzinformationen 2 zugeordnet bzw. überlagert, sondern nur den für eine Fahraufgabe relevanten Bildpunkten, nämlich Bildpunkte, die kollisionsrelevante Objekte 3a zeigen. Die Kollisionsrelevanz wird beispielsweise aus einer Entfernung zu einer Kamera des Kamerasystems und der jeweiligen Bildpunktkoordinate ermittelt. Genauer kann die Ermittlung anhand der Entfernung zu einer Ebene, in der Projektionszentren der Kamera liegen, erfolgen. Vorliegend umfassen die kollisionsrelevanten Objekte die Fußgängergruppe 7, einen Bordstein 8, den Ampelmast 9 und das querende Fahrzeug 10 im Hintergrund. Diese sind entsprechend hervorgehoben, bevorzugt farblich. Das in Figur 1 überlagerte Bild wird aus dem in Figur 2 und dem in Figur 3 dargestellten Bildern erzeugt.

Figur 2 zeigt schematisch ein Kamerabild 11, zum Beispiel von einer Kamera eines Stereo-Video-Sytems. Das vorliegende Bild ist mittels einer monochromen Kamera, das heißt einer Kamera mit einem Farbkanal und/oder Intensitätskanal aufgenommen, kann jedoch auch mittels einer Farbkamera, das heißt einer Kamera mit mehreren Farbkanälen aufgenommen werden. Es können auch Kameras verwendet werden, deren spektrale Empfindlichkeit sich mindestens in einem Farbkanal in einem für den Menschen nicht sichtbaren Bereich erstreckt. Dem in Figur 2 dargestellten Kamerabild 11 wird das Bild gemäß Figur 3 überlagert oder das Kamerabild 11 wird mit entsprechenden Zusatzinformationen 2 angereichert. Die Überlagerung kann beliebig erfolgen, beispielsweise mittels Mischen, Verdecken, nichflinearem Verknüpfen und dergleichen.

Figur 3 zeigt schematisch ein Bild nach Fig. 2 mit Zusatzinformationen 2, vorzugsweise Disparitäten. Das Bild nach Fig. 3 ist mittels eines Stereokamerasystems gewonnen. Zu im Wesentlichen jedem Bildpunkt ist in dem Bild nach Fig. 3 eine Disparität wiedergegeben. Die Disparitäten der Bildpunkte sind hier durch Farben dargestellt, wobei weiten Entfernungen von der Kamera etwa die kälteren Farben (d. h., die Farben mit höherer Wellenlänge, vorliegend vorzugsweise dunkelblau - bei Bezugszeichen 12) und den näher zur Kamera gelegenen Entfernungen die wärmeren Farben (d. h. die Farben mit kleinerer Wellenlänge) zugeordnet sind, wobei die Zuordnung beliebig gewählt werden kann. Wenn einem Bildpunkt keine Disparität zugeordnet werden kann oder soll, ist dieser mit einer festgelegten Farbe, z. B. schwarz (oder einer anderen beliebigen Farbe oder Intensität) gekennzeichnet. Zur Gewinnung der Disparitäten werden korrespondierende Bildpunkte mehrerer Kamerabilder unterschiedlicher Standorte verarbeitet. Anhand der Verschiebung der korrespondierenden Punkte zwischen den unterschiedlichen Kamerabildern wird mittels Triangulation die Entfernung des entsprechenden Bildpunktes in der realen Umgebung (Welt, Weltpunkt) bestimmt. Wenn gleich ein Disparitätenbild vorliegt, kann dieses direkt ohne vorherige Entfernungsbestimmung verwendet werden. Die Auflösungen der mehreren Kameras kann beispielsweise unterschiedlich ausgebildet sein. Die Kameras können beliebig zueinander beabstandet angeordnet sein, beispielsweise übereinander, nebeneinander, diagonal versetzt etc. Je mehr Kameras verwendet werden, desto höher ist die erzielbare Qualität des Bildes für die Visualisierung. Zur Gewinnung der Zusatzinformationen 2 können zusätzlich oder statt des Stereo-Video-Systems andere Sensoren eingesetzt werden, beispielsweise Lidar-Sensoren, Laser-Scanner, Range-Imager (z. B. PMD-Sensoren, Photonic Mixing Device), lichflaufzeitausnutzende Sensoren, Sensoren, die mit Wellenlängen außerhalb des sichtbaren Bereichs arbeiten (Radar-Sensoren, Ultraschall-Sensoren) und dergleichen. Bevorzugt sind Sensoren, die ein Bild von Zusatzinformationen 2 liefern, insbesondere viele Zusatzinformationen für die unterschiedlichen Raumrichtungen liefern.

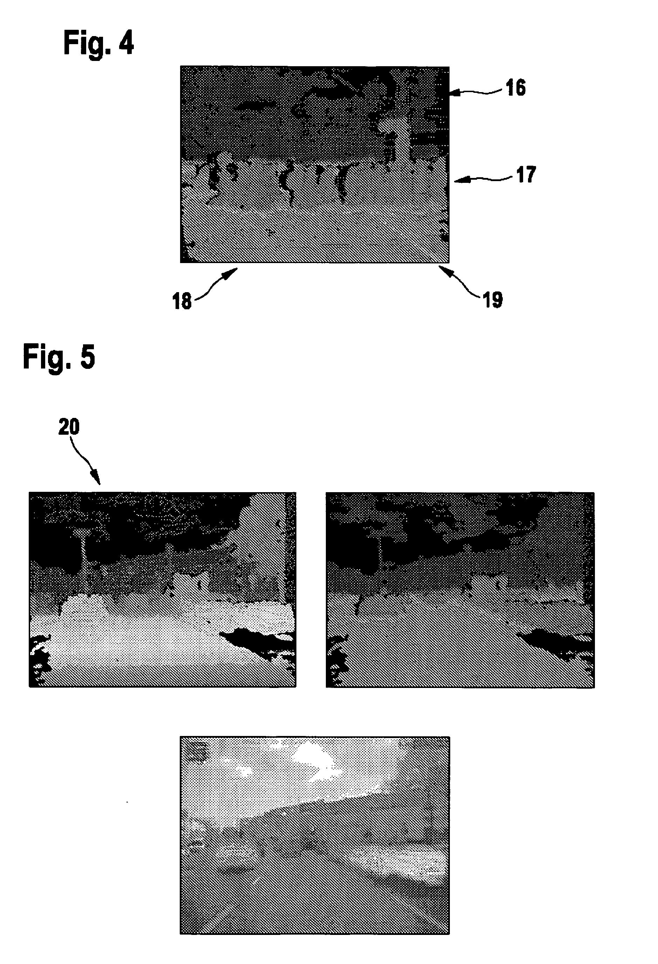

In Figur 3 sind die Zusatzinformationen 3 oder auch Entfernungs- oder Abstandsinformationen nicht als farbcodierte Entfernungen, sondern als farbcodierte Disparitäten angezeigt, wobei zwischen den Entfernungen und den Disparitäten ein reziproker Zusammenhang besteht. Hierdurch ändert sich die Färbung im Fernbereich (beispielsweise blau - bei Bezugszeichen 13) nur langsam mit dem Abstand, während im Nahbereich (beispielsweise rot bis gelb - Bezugszeichen 14 bis 15) eine kleine Entfernungsänderung zu einer großen Farbänderung führt. Die Disparitäten können zur einfacheren Wahrnehmung durch einen Benutzer, zum Beispiel einen Fahrer, klassifiziert werden. Dies ist anhand Figur 4 dargestellt.

Figur 4 zeigt schematisch eine bildpunktweise Klassifikation der Bilddaten eines Kamerabildes 11. In Fig. 4 sind diejenigen Bildpunkte in einer bestimmten Farbe dargestellt, für die festgestellt wurde, dass sich dort kollisionsrelevante Hindernisse befinden. Als Farbe für Kennzeichnung dieser Bildpunkte wird eine beliebige Farbe, zum Beispiel rot (bei Bezugszeichen 14), verwendet. Da die Färbungen von Fig. 4 nur für die Verarbeitung und nicht für den Fahrer vorgesehen sind, kann die Färbung oder sonstig Kennzeichnung beliebig gewählt werden. Die Klassifizierungen der Bilddaten bzw. der zugehörigen Objekte in dem Bild nach Fig. 4 haben insbesondere die Bedeutung: Klasse I oder Klasse Hoch - bei Bezugszeichen 16), beispielsweise Farbe Blau: das Objekt befindet sich sehr hoch bzw. weit außerhalb einer Bezugsebene und ist damit in Bezug auf eine Kollision irrelevant, Klasse II oder Klasse Relevant -bei Bezugszeichen 17 - , beispielsweise Farbe Rot: das Objekt oder Hindernis befindet sich in einer kollisionsrelevanten Höhe, Klasse III oder Klasse Tief, beispielsweise - bei Bezugszeichen 18 - Farbe Grün: das Objekt oder Hindernis ist Flach und damit in Bezug auf eine Kollision irrelevant.

Neben den Hauptklassen 16, 17, 18 können Zusatzklassen (z.B. "Tief") oder Zwischenklassen 19 bestimmt werden, welche beispielsweise durch dazwischen liegende Farbschattierungen gekennzeichnet sind. In Fig. 4 ist beispielsweise je eine Zwischenklasse 19 mit einer bevorzugten Farbgebung Gelb-Braun und Violett verwendet, um Bordsteine 8, Bürgersteige bzw. Ampelmasten 9 oder Objekte in etwa 2,5m Höhe zu kennzeichnen. Diese Klassen 19 kennzeichnen Übergangsbereiche. Weiter kann auch eine Klasse "Tief` bestimmt werden, in welche zum Beispiel Straßengräben, Abgründe, Schlaglöcher oder dergleichen fallen.

Besonders vorteilhaft ist nun die Visualisierung, in welcher nur die Punkte, an denen ein Hindernis vorliegt (Klasse II 17, vorzugsweise rote Darstellung) überlagert mit dem Kamerabild dargestellt werden. Die nicht kollisionsrelevanten Klassen werden nicht überlagert, das heißt, dort ist nur das Kamerabild 11 zu sehen, welches vorzugsweise ohne Färbung dargestellt ist. Entsprechend kann man Klassen bis zu einer maximalen Entfernungsobergrenze darstellen und Klassen mit Zusatzinformationen 2 außerhalb des Bereichs nicht hervorheben. Der Entfernungsbereich kann in Abhängigkeit von der Fahrsituation, beispielsweise bezüglich der Geschwindigkeit, variieren. Zum Beispiel ist bei einem Einparkvorgang nur der Entfernungsbereich in unmittelbarer Nähe zum eigenen Fahrzeug relevant. Bei einer Autobahnfahrt sind hingegen auch entferntere Bereiche relevant. Anhand der verfügbaren Abstandsinformationen kann pro Bildpunkt entschieden werden, ob dieser innerhalb oder außerhalb des relevanten Entfernungsbereichs liegt oder nicht.

Die Einfärbung wird nun wieder unter Bezugnahme von Fig. 1 erläutert. In Fig. 1 ist zu erkennen, dass das Fahrzeug 10 links im Hintergrund auf der Kreuzungsmitte (vorzugsweise blau gefärbt) gerade noch leicht hervorgehoben ist, während weiter entfernte Objekte nicht mehr hervorgehoben werden, da sie für die augenblickliche Fahrsituation irrelevant sind. Für Übergangsbereiche oder Übergangsklassen können beispielsweise Farbmischungen verwendet werden, sodass an diesen Bereichen beispielsweise eine gewichtete Mittelung aus Kamerabild 11 und Zusatzinformation 2 vorgenommen wird. Hierdurch entstehen gleitende Übergänge zwischen den Klassen bzw. den dargestellten Färbungen. Zudem können Klassengrenzen und/oder Zusatzinformationen 2 geglättet werden, um so eine Unschärfe darzustellen. Hierbei werden Fehler gemittelt und mit geglättet, sodass es nicht zu Verwirrungen des Fahrers kommt. Die Glättung kann sowohl in örtlicher als auch in zeitlicher Richtung durchgeführt werden. Einer zu großen Unschärfe kann durch Darstellen von Objektkanten, Objektkonturen etc. entgegengewirkt werden. Hierdurch werden die durch die Färbung unscharfen Objekte mittels einer Konturdarstellung schärfer abgebildet. Um einen mit der Glättung verbundenen Unschärfeeindruck zu minimieren oder verhindern, können zusätzliche Linien und/oder Konturen, beispielsweise Objektkanten, Objektkonturen etc. dargestellt werden, beispielsweise unter Verwendung des Canny-Algorithmus, der zum Beispiel dominante Kanten des Kamerabildes findet und bereitstellt.

Figur 5 zeigt schematisch drei Bilder aus unterschiedlichen Stufen für eine Visualisierung einer Verkehrssituation. In dem oberen linken Bild ist ein Disparitätsbild 20 als Zusatzinformationsbild dargestellt, mit einer Färbung von nah (vorzugsweise durch eine rote Farbe) bis fern (vorzugsweise durch eine blaue Farbe). Das obere rechte Bild stellt das Ergebnis einer entsprechenden Klassifikation dar. Die für die Nähe verwendete Färbung, beispielsweise rot, bedeutet, dass der entsprechende Weltpunkt in kollisionsrelevanter Höhe angeordnet ist. Das untere Bild zeigt die aus den beiden oberen Bildern resultierende Visualisierung. Dabei ist eine andere Farbskala als bei den oberen Bildern gewählt.

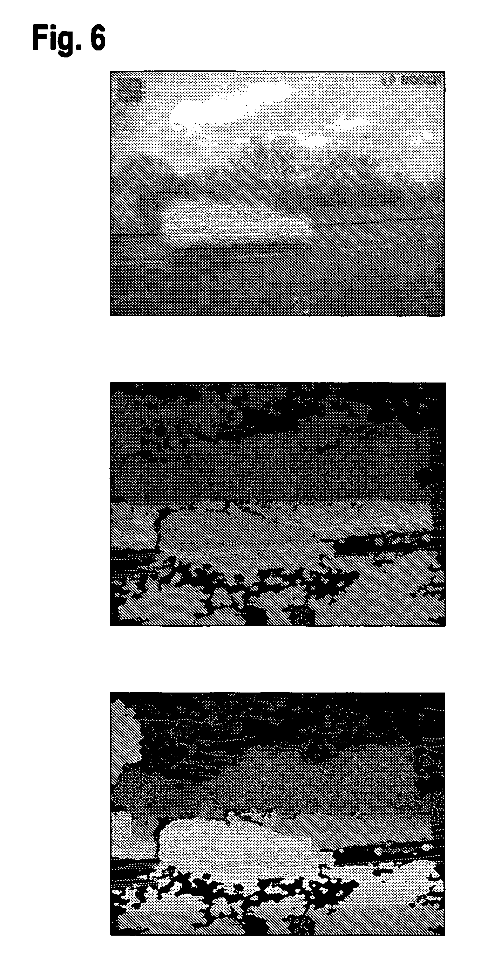

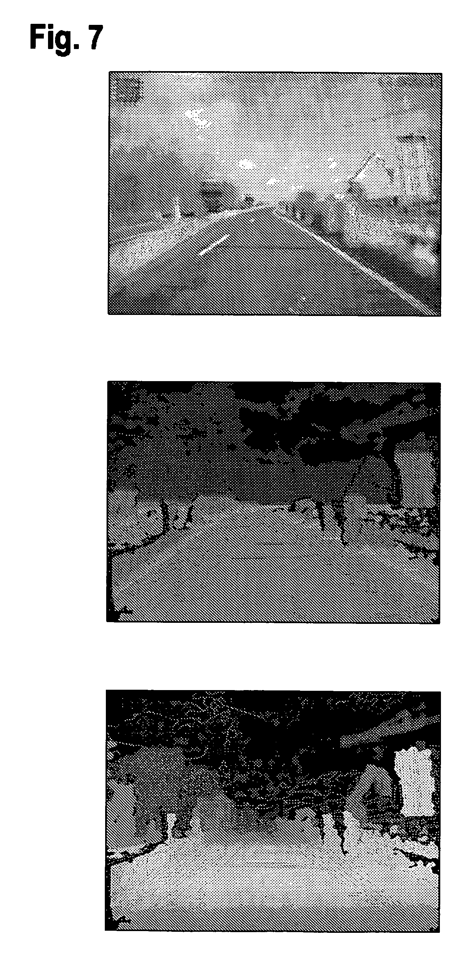

Die Figuren 6 und 7 zeigen schematisch drei Bilder aus unterschiedlichen Stufen für eine Visualisierung weiterer Verkehrssituationen. Das Prinzip der Visualisierung entspricht denen der Figur 5.

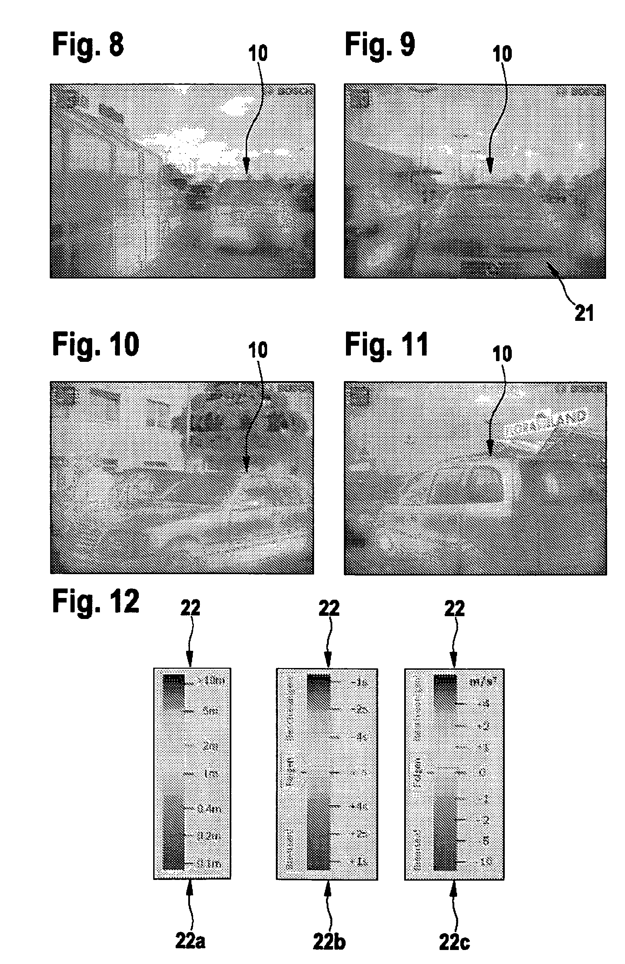

Die Figuren 8 bis 11 zeigen schematisch je ein Bild einer Visualisierung bei vier unterschiedlichen Einparksituationen. In Figur 8 ist bei einem Vorwärtseinparken ein in Fahrrichtung befindliches Fahrzeug 10 noch relativ weit entfernt. In Figur 9 befindet sich das einparkende Fahrzeug relativ nahe an dem gegenüberstehenden Fahrzeug 10, sodass der Frontbereich 21 des gegenüberstehenden Fahrzeugs als Hindernis, vorzugsweise rot, markiert ist. Die Figuren 10 und 11 zeigen weitere Einparksituationen, in denen ein Kraftfahrzeug 10 schräg zur Fahrrichtung angeordnet ist, sodass das entsprechende Fahrzeug 10 farblich unterschiedlich entsprechend der Zusatzinformationen 2 dargestellt ist. Das Fahrzeug 10 ist hierbei nicht als Ganzes als Objekt gekennzeichnet. Es werden lediglich die einzelnen Bildpunkte ausgewertet, ohne eine Gruppierung zu einem Objekt "Kraftfahrzeug".

Figur 12 zeigt schematisch drei die Visualisierung ergänzende Skalen 22 zur Erleichterung der Orientierung eines Fahrers. Die erste Skala 22a ist eine metrische Skala, zum Beispiel mit der Einheit Meter. Diese Skala 22a weist nach Art einer Legende jeder verwendeten Farbe eine Längeneinheit zu. Es können aber auch andere Kennzeichnungen in der Skale aufgeführt sein, beispielsweise Texturen, Helligkeiten, Schraffuren etc. Die zweite Skala 22b ist eine Zeit-Entfernungsskala, vorliegend mit der Angabe der Zeit bis zu einer Kollision. Hier ist jeder Färbung eine Zeit mit der Einheit Sekunden zugeordnet. Zusätzlich sind Hinweise für eine Fahraufgabe aufgetragen (Bremsen, Folgen, Beschleunigen). Die dritte Skala 22c weist jeder Färbung einen Wert mit der Einheit m/s², das heißt eine Beschleunigung, zu. Zudem sind auch hier die Hinweise für eine Fahraufgabe angegeben. Das entsprechende Bild wird entsprechend der mit der Skale festgelegten Kennzeichnung gekennzeichnet, zum Beispiel gefärbt.

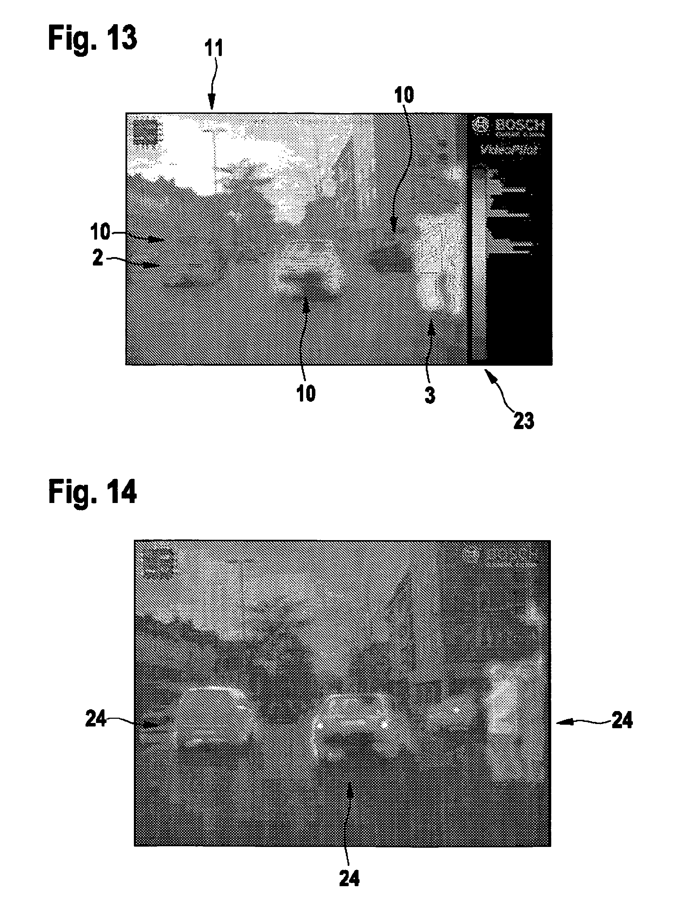

Figur 13 zeigt schematisch eine Visualisierung einer Verkehrssituation mit einem ergänzenden Histogramm 23. Neben den überlagert in dem Kamerabild 11 dargestellten Zusatzinformationen 2 sind am rechten Rande des Bildes die Zusatzinformationen 2 verarbeitet als Histogramm 23 dargestellt. In dem Histogramm 23 ist qualitativ und/oder quantitativ dargestellt, welche Farben oder entsprechend welche Zusatzinformationswerte wie häufig in der aktuellen Situation auftreten. In dem Histogramm 23 sind vier Spitzen erkennbar. Die beiden sichtbaren Spitzen im Bereich einer Farbe, vorliegend beispielsweise der Farbe Gelb, stehen in dem Ausführungsbeispiel für die Abstände zu den beiden in dem Bild dargestellten Personen 3 am Straßenrand. Die nächste Spitze ist in einer anderen Färbung, beispielsweise im Bereich Türkisgrün, zu finden und steht für das vorausfahrende Fahrzeug 10 auf der eigenen Spur. Die erkennbare vierte Spitze liegt beispielsweise im Bereich der Farbe Hellblau und kennzeichnet das Fahrzeug 10 auf der linken Spur. Eine weitere, schwächere Spitze beispielsweise im Bereich einer Farbe Dunkelblau steht für das etwas weiter entfernte Fahrzeug 10, das nach rechts abgebogen ist. Die Intensität der Färbung nimmt ab einer vorgegebenen Zusatzinformation 2 kontinuierlich ab und Objekte mit großem Abstand werden nicht mehr eingefärbt. Das rechts abgebogene Fahrzeug 10 befindet sich bereits in dem Bereich, in dem die Intensität abnimmt. Die Intensitätsveränderung ist auch in dem Histogramm 23 wiedergegeben. Es können zusätzlich weitere Informationen wie der konkrete Abstand eingeblendet werden, auch abhängig von der jeweiligen Situation. Neben dem Kamerabild 11 aus der Sicht des Fahrers können auch andere Ansichten dargestellt werden.

Figur 14 zeigt schematisch eine Visualisierung einer Verkehrssituation mit einer Aufhellung von Bildpunkten statt einer Färbung. Hier sind die Bildbereiche 24, von denen bekannt ist, dass sie kollisionsrelevante Objekte beinhalten, optisch aufgehellt, während die restlichen Bildbereich abgedunkelt sind. Der Übergang wurde gleitend gewählt, sodass die Darstellung für den Fahrer ansprechender ist.

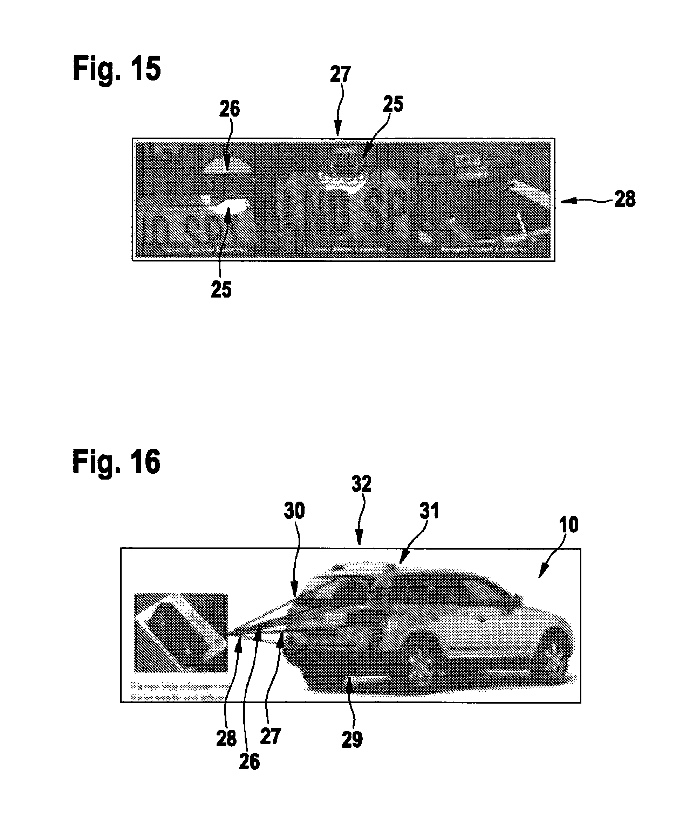

Figur 15 zeigt schematisch drei unterschiedliche Anordnungen für eine Kamera 25 zur Umsetzung der Bildvisualisierung. Die Kameras 25 sind so angeordnet, dass sie einen für die gestellte Fahraufgabe entsprechenden Bereich erfassen. In Figur 15 ist dies der Bereich hinter einem Fahrzeug, das heißt, die Fahraufgabe ist ein unterstütztes Rückwärtsfahren. Die Kameras 25 können als beliebige Kamera ausgebildet sein, beispielsweise als monokulare Kamera, ggf. mit einem zusätzlichen Sensor zur Erzeugung eines Entfernungsbildes, wie einem Photomischdetektor (PMD - Photonix Mixer Device), als monochrome Kamera oder als Farbkamera, optional mit einer zusätzlichen Infrarot-Beleuchtung. Die Kopplung mit einem Display erfolgt drahtgebunden oder drahtlos. Zur Gewinnung von Zusatzinformationen 2 ist mindestens ein weiterer Sensor erforderlich, beispielsweise eine zweite Kamera, Ultraschallsensoren. Lidarsensoren, Radarsensoren und dergleichen. Die Kameras 25 sind im ersten Bild an einem Kofferraumdeckel 26, in einem zweiten Bild an einem hinteren Nummernschild 27 und im dritten Bild an einer hinteren Stoßstange 28 integriert.

Ein entsprechendes System kann beispielsweise als Stereo-Kamera-System mit analogen und/oder digitalen Kameras, CCD- oder CMOS-Kameras oder anderen hochauflösenden, bildgebenden Sensoren, mit zwei oder mehreren Kameras/lmagers/Optiken, als System auf Basis von zwei oder mehreren Einzelkameras und/oder als System mit nur einem Imager und einer geeignete Spiegeloptik ausgebildet sein. Die bildgebenden Sensoren oder bildgebenden Einheiten können als beliebige visuell abbildende Einrichtung ausgebildet sind. Bei einem Imager zum Beispiel handelt es sich um einen Sensorchip, der Teil einer Kamera sein kann und sich im Inneren der Kamera hinter deren Optik befindet. Entsprechende Imager wandeln Lichtintensitäten in entsprechende Signale um.

Weiter ist mindestens ein Bildverarbeitungsrechner erforderlich. Die Verarbeitung der Bilddaten kann innerhalb der Kamera 25 (in sogenannten "smart cameras"), in einem dedizierten Bildverarbeitungsrechner oder auf vorhandenen Rechnerplattformen, wie zum Beispiel einem Navigationssystem erfolgen. Die Verteilung der Rechenoperationen auf verschiedene Teilsysteme ist möglich. Die Anordnung des Kamera-Systems kann unterschiedlich sein, wie in Fig. 16 dargestellt.

Figur 16 zeigt schematisch unterschiedliche Anordnungen für ein Stereo-Video-System an einem Personenkraftfahrzeug 10. Das Kamera-System kann in der Griffmulde des Kofferraumdeckels 27 integriert sein. Weiter kann das Kamera-System integriert in den Kofferraumdeckel 26, zum Beispiel ausfahrbar im Bereich eins Fahrzeugemblems angeordnet sein. Auch ist eine integrierte Anordnung in dem Stoßfänger 28, in der Heck- und/oder Bremsleuchteinheit 29, hinter der Heckscheibe 30, zum Beispiel im Bereich der ggf. vorhandenen dritten Bremsleuchte, in der B-Säule, in der C-Säule 31 oder in dem Heckspoiler 32 möglich.

## Patentansprüche

1. Verfahren zur Visualisierung von Bilddaten einer Fahrzeugumgebung, umfassend die Schritte:
Darstellung der Bilddaten als Bildpunkte aufweisendes Bilddatenbild, wobei für eine Fahraufgabe relevante Bildpunkte des Bilddatenbilds mit Zusatzinformationen (2) in Form von Entfernungsinformationen oder aus den Entfernungsinformationen abgeleiteten Informationen überlagert werden, um ein mit den Zusatzinformationen (2) überlagertes Bilddatenbild zu erzeugen, **dadurch gekennzeichnet, dass** Übergänge der Zusatzinformationen (2) geglättet dargestellt werden und um einen mit der Glättung verbundenen Unschärfeeindruck zu minimieren oder zu verhindern, zusätzliche Linien und/oder Konturen, beispielsweise Objektkanten oder Objektkonturen, dargestellt werden.

2. Verfahren nach Anspruch 1, **dadurch gekennzeichnet, dass** die Bilddaten in Bezug auf ihre Entfernungsinformationen klassifiziert werden und die Zusatzinformationen (2) klassifiziert dargestellt werden, durch eine unterschiedliche Färbung oder Aufhellung.

3. Verfahren nach Anspruch 1 oder 2, **dadurch gekennzeichnet, dass** die Zusatzinformationen (2) zusätzlich in einer verarbeiteten Darstellung dargestellt werden, insbesondere als Histogramm.

4. Computerprogramm umfassend Programmcodemittel zum Durchführen aller Schritte des Verfahrens gemäß der Ansprüche 1 bis 3, wenn das Programm auf einem Computer ausgeführt wird.

5. Computerprogrammprodukt umfassend Programmcodemittel die auf einem computerlesbaren Medium gespeichert sind, um das Verfahren nach einem der Ansprüche 1 bis 3 durchzuführen, wenn das Programmprodukt in einem Computer läuft.

6. Vorrichtung zur Visualisierung von Bilddaten, insbesondere von Bilddaten, zu denen mindestens eine Zusatzinformation (2) vorliegt, mit Mitteln zur Durchführung des Verfahrens nach einem der vorherigen Ansprüche 1 bis 3.

7. Vorrichtung nach Anspruch 6, **dadurch gekennzeichnet, dass** die Mittel eine Anzeigeeinrichtung umfassen, die ausgebildet ist, weitere Informationen wie Zusatzinformationen (2) überlagert zu Bilddaten darzustellen.

8. Vorrichtung nach Anspruch 6 oder 7, **dadurch gekennzeichnet, dass** die Vorrichtung mindestens eine Schnittstelle aufweist zur Kopplung an anzuschließende Systemkomponenten wie die eines Fahrerassistenzsystems, eines Kraftfahrzeugs oder weiterer Sensoren.

9. Vorrichtung zur Visualisierung von Bilddaten, zu denen mindestens eine Zusatzinformation (2) vorliegt, nach einem der Ansprüche 6 bis 8, ausgewählt aus der Gruppe umfassend:
Fahrerassistenzsystem, insbesondere Stereo-Video-basierte Fahrerassistenzsysteme,
Überwachungskamera-System,
Kamerasystem für ein Flugzeug oder Fluggerät, oder
Kamerasystem für ein Wasserfahrzeug oder Unterwasserfahrzeug.

## Claims

1. Method for visualizing image data of the surroundings of a vehicle, comprising the steps of:
displaying the image data as an image data image having pixels, wherein additional information (2) in the form of distance information or information which is derived from the distance information is superimposed on pixels of the image data image which are relevant for a driving task, in order to generate an image data image on which the additional information (2) is superimposed, **characterized in that** junctions between the additional information items (2) are displayed in a smoothed fashion, and additional lines and/or contours, for example object edges or object contours, are displayed in order to minimize or prevent an impression of being out of focus, which is associated with the smoothing.

2. Method according to Claim 1, **characterized in that** the image data are classified with respect to their distance information, and the additional information (2) is displayed as classified by means of different colouring or brightness.

3. Method according to Claim 1 or 2, **characterized in that** the additional information (2) is additionally displayed in a processed display, in particular as a histogram.

4. Computer program comprising program code means for carrying out all the steps of the method according to Claims 1 to 3 when the program is run on a computer.

5. Computer program product comprising program code means which are stored on a computer-readable medium in order to carry out the method according to one of Claims 1 to 3 when the program product runs in a computer.

6. Device for visualizing image data, in particular image data for which at least one additional information item (2) is present, having means for carrying out the method according to one of the preceding Claims 1 to 3.

7. Device according to Claim 6, **characterized in that** the means comprise a display device which is designed to display further information such as additional information (2) superimposed on image data.

8. Device according to Claim 6 or 7, **characterized in that** the device has at least one interface for coupling to system components which are to be connected, such as those of a driver assistance system, of a motor vehicle or further sensors.

9. A device for visualizing image data for which at least one additional information item (2) is present, according to one of Claims 6 to 8, selected from the group comprising:
a driver assistance system, in particular stereo-video-based driver assistance systems,
monitoring camera system,
camera system for an aeroplane or aircraft or
camera system for a watercraft or underwater vehicle.

## Revendications

1. Procédé pour visualiser les données d'image de l'environnement d'un véhicule comprenant l'étape suivante :
représentation des données d'image sous la forme d'une image de données d'image qui présente des pixels, des informations supplémentaires (2) sous la forme d'informations de distance ou d'informations dérivées à partir des informations de distance étant superposées aux pixels de l'image de données d'image pertinents pour une opération de conduite afin de produire une image de données d'image à laquelle sont superposées les informations supplémentaires (2),
**caractérisé en ce que** les transitions des informations supplémentaires (2) sont représentées lissées et, pour réduire ou empêcher une impression de manque de netteté liée au lissage, des lignes et/ou des contours supplémentaires, par exemple des bords d'objet ou des contours d'objet, sont représentés.

2. Procédé selon la revendication 1, **caractérisé en ce que** les données d'image sont classées en référence à leurs informations de distance et les informations supplémentaires (2) sont représentées classées par une coloration ou un éclaircissement différent(e).

3. Procédé selon la revendication 1 ou 2, **caractérisé en ce que** les informations supplémentaires (2) sont en plus représentées dans une représentation traitée, notamment sous la forme d'un histogramme.

4. Programme informatique comprenant des moyens de code de programme pour exécuter toutes les étapes du procédé selon les revendications 1 à 3 lorsque le programme est exécuté sur un ordinateur.

5. Produit de programme informatique comprenant des moyens de code de programme qui sont enregistrés sur un support lisible par ordinateur pour mettre en oeuvre le procédé selon l'une des revendications 1 à 3 lorsque le produit de programme est exécuté sur un ordinateur.

6. Dispositif pour visualiser des données d'image, notamment des données d'image pour lesquelles il existe au moins une information supplémentaire (2), comprenant des moyens pour mettre en oeuvre le procédé selon l'une des revendications 1 à 3.

7. Dispositif selon la revendication 6, **caractérisé en ce que** les moyens comprennent un dispositif d'affichage qui est configuré pour représenter d'autres informations telles que les informations supplémentaires (2) superposées aux données d'image.

8. Dispositif selon la revendication 6 ou 7, **caractérisé en ce que** le dispositif présente au moins une interface pour la connexion de composants de système à raccorder tels que ceux d'un système d'assistance au conducteur, d'un véhicule automobile ou d'autres capteurs.

9. Dispositif pour visualiser des données d'image pour lesquelles il existe au moins une information supplémentaire (2) selon l'une des revendications 6 à 8, choisi parmi le groupe incluant :
un système d'assistance au conducteur, notamment des systèmes d'assistance au conducteur basés sur la vidéo stéréoscopique,
un système de caméra de surveillance,
un système de caméra pour un aéronef ou un engin volant, ou
un système de caméra pour un véhicule nautique ou un véhicule sous-marin.
